# EUROPEAN PATENT APPLICATION

(11) **EP 1 894 703 A1**
(43) Date of publication of application: **05.03.2008**
(21) Application number: 07253366.4
(22) Date of filing: 28.08.2007
(51) Int. Cl.: B29C 65/00, B32B 37/30, B65B 1/02

(54) **Bonding method for continuous traveling web**

(30) Priority: 28.08.2006 US 840584 P
(71) Applicant: Curt G. Joa, Inc., Sheboygan Falls, WI 53085-0903 (US)
(72) Inventor: Von Vajna, Andres A., Kohler Wisconsin 53044 (US); Lake, Andrew M., Appleton Wisconsin 54915 (US)
(74) Representative: Dee, Ian Mark

(57) **Abstract**

Provided is a method for bonding continuous traveling webs (11,12), which allows for significant increase in web processing speeds. A method according to the present invention includes providing a web including a bonding agent (112) that may require activation prior to adhesion. Bonding agent activation may be, for example, by heat transfer or wetting. The primary activation of the bonding agent (112) occurs separately from any applied force required for proper adhesion. Adhesion force may be applied by a noncatalytic pressure means (13,14) including a crimp roller. The method may further include the insertion of a product between web layers (11,12) to be brought into adhesive engagement with one another. A further web process step may include the cutting of bonded webs.

## Description

### Background of the Invention

Generally, the present invention relates to bonding multiple webs. More specifically, the present invention is directed to a method for bonding traveling continuous webs by activating an applied bonding agent prior to applying pressure with a crimp roller that is noncatalytic with respect to the bonding agent.

Prior art methods exist for bonding traveling webs. However, these methods are limiting, especially with respect to the speed of the traveling web. Often, webs to be joined contain a bonding agent that requires activation for bonding, such as thermoplastic resin materials which may be joined and sealed under the application of heat. In such an instance the heat acts as a bonding agent catalyst, thereby changing the bonding agent phase generally from a solid to a liquid. Some bonding agents, and especially heat seal synthetics, have been limiting. Most often, prior art methods supply the required catalyst simultaneously with a required bonding pressure, as through the use of a heated crimp roller. A heated crimp roller, as understood in the art, is a roller that has a heated surface, which applies desired pressure at the nip of the heated roller and an opposing surface. The opposing surface may also be a roller. Therefore, the heat, or bonding agent catalyst, is applied at the same time as the pressure.

While seemingly efficient, the process of applying heat and pressure simultaneously is not advantageous for webs traveling at very high speeds. That is, bonding agents requiring activation also generally require some finite activation duration. Therefore, the speed at which a web having a deactivated bonding agent can travel through an activating roller is constrained by the activation duration. As an example, if a bonding agent requires an activating duration of J seconds at a predetermined temperature, then the maximum cycles at which a combined process can run is 1/J cycles per second. Currently, the processes employed in the art run at a maximum speed of around 85-120 cycles per second, thus indicating an activating duration of about 8-12 milliseconds.

### Summary of the Invention

Surprisingly, the separation of the processes of bonding agent activation and bonding pressure application allows exponential increase in the speed of the traveling web. Conversely, an exponential increase in the speed of a traveling web allows the separation of adhesive activation and bonding pressure application. That is, although workable at a variety of speeds, a high rate of speed makes possible the activation of the bonding agent prior to applying pressure because the activated bonding agent does not have enough time to deactivate prior to the pressure application.

The present invention provides a method for bonding continuous traveling webs using a pressure means that is noncatalytic with respect to a web bonding agent. The device and method allow the speed of the traveling web to increase beyond the previously limiting bonding agent activation dwell time. By ensuring that the applied bonding agent is active at the time the webs reach the pressure means, there is no need to include the bonding agent activation within the same device.

By employing an embodiment of the method of the present invention, the output of a sealing process has increased dramatically. Rather than running at a limited 85-120 cycles per minute, speeds can be substantially increased by approximately five hundred percent or more.

Provided is a method for bonding traveling webs. The method involves a provided web or plurality of webs, at least one of which has a bonding agent applied thereto. The bonding agent is activated, thereby creating an activated web portion. The activated web portion is conveyed some distance and then the web or plurality of webs is compressed, thereby forming a bonded web by an adhesive engagement between at least two of the plurality of webs or between two surfaces of the same web having been arranged in a general C-shaped cross-section. The arrangement of a single web into a general C-shaped cross-section relative to its direction of travel may occur prior to the providing of the web material. In other words, a prefolded web may be provided. In addition, the arrangement may occur before or after the activating step. In one embodiment, the activating step may include heating said bonding agent by conductive heat transfer by way of heated rollers, for example. In another embodiment, heating may include radiant heat transfer, such as induction heating. As different bonding agents may require different activation, an alternate embodiment may include an activating step comprising wetting the bonding agent.

The compression of web surfaces may be achieved by a pressure means to which the webs are conveyed after the bonding agent having been activated. In one embodiment the pressure means comprises a crimp roller and an opposing roller. The crimp roller may include at least one indentation protruding radially inward from an outer surface of the roller. The pressure means is noncatalytic with respect to said bonding agent. That is, although a portion of the bonding agent activation may occur at the pressure means, the primary bonding agent activation occurs separately from the pressure means. The bonding agent may be applied to one or more webs in a uniform pattern.

The compression of the webs creates an adhesive engagement between two web surfaces. The adhesive engagement may be a closed shape, such as a generally rectangular, generally elliptical, or generally triangular. Alternatively, the adhesive engagement may be an open shape, such as a general C-shape, general V-shape or general W-shape.

A method according to the present invention may include further processing steps. For instance an embodiment of the present invention further includes a step of cutting the bonded web. Another additional processing step may be the insertion of a consumable product between at least two bonded web layers, where the product is contained at least partially by the adhesive engagement holding the web layers together. Examples of such consumable product are a preparation pad moistened with isopropyl alcohol or even a food product.

### Brief Description of the Drawings

FIG. 1 is a diagrammatic representation showing two traveling webs being joined by a method according to the present invention.
FIG. 2 is a diagrammatic representation of an embodiment of the present invention.
FIG. 3 is a diagrammatic representation of a second embodiment of the present invention.
FIG. 4 is a top perspective view of noncatalytic crimp rolls as employed in the present invention.
FIG. 5 is a top plan view of a single bonded compartment made by a method according to the present invention.
FIG. 6 is a cut away view of the compartment of FIG. 5 taken along line 6-6.

### Description of the Preferred Embodiment

Although the disclosure hereof is detailed and exact to enable those skilled in the art to practice the invention, the physical embodiments herein disclosed merely exemplify the invention which may be embodied in other specific structures. While the preferred embodiment has been described, the details may be changed without departing from the invention, which is defined by the claims.

Definition: The adjective NONCATALYTIC, as used in this specification, is meant to convey that the noun which it modifies is not the primary source of bonding agent activation. That is, if the bonding agent is heat activated, a noncatalytic roller is a roller that is not the primary source of heat which activates the bonding agent.

If there exists any discrepancy between the ordinary understanding of the term NONCATALYTIC and the above stated definition, then both definitions shall apply.

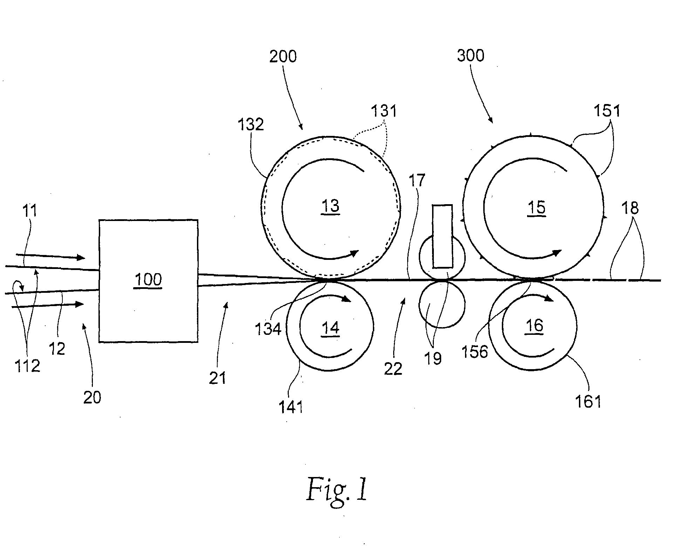

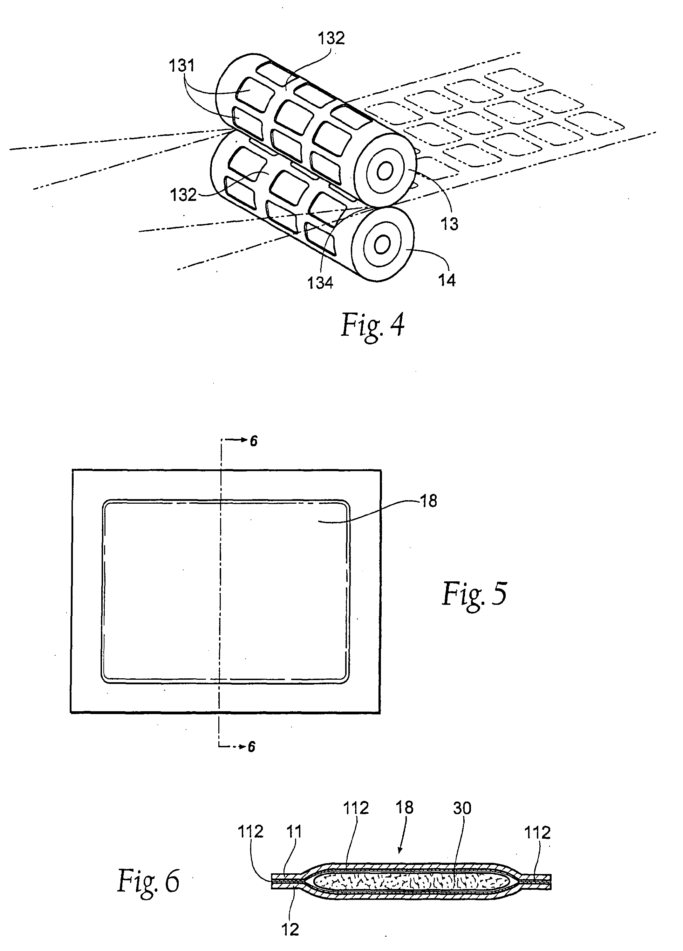

Referring to FIG. 1, a diagrammatic representation of two traveling webs 11,12 being joined by a method according to the present invention is shown. Generally, the method includes the steps of providing a plurality of webs 11,12 having an applied bonding agent 112 at a first location 20, activating 100 the bonding agent 112, thereby producing a pair of separated webs having activated bonding agent 112 at a second location 21, causing the webs 11,12 to travel some distance and applying pressure to the webs 11,12 at a third location 200, thereby forming a bonded web 17. This operation can especially be seen in FIG. 4. The applied bonding agent 112 may be applied across the entire surface of the traveling webs 11,12 or in a predetermined pattern. Additionally, the bonded web 17 may further be cut at a fourth location 300, or simultaneously with the application of pressure at the second location 200. The cutting of the bonded web 17 is preferably carried out by first longitudinally slicing the bonded web 17 by a rotary cutter and anvil 19 followed by a cutter roll 15 acting on an anvil roll 16. The cutter roll 15 has a plurality of projections 151 that act in a cooperative fashion with the surface 161 of the anvil roll 16 at the nip 156. The result of cutting may be a plurality of single bonded compartments 18. Alternatively, rather than provide a plurality of webs 11,12, a single web turned on itself in a C configuration could also be employed. The method is then be utilized to bond the opposing surfaces of the single web.

The activation 100 is generally dependent upon the type of bonding agent 112 that is used. An example of a bonding agent 112 requiring activation, as mentioned above, is a thermoplastic resin material, which is activated by heat. A representative thermoplastic resin material is Surlyn^{®}, an ionomer resin that has a good affinity for many coating materials. Furthermore, the bonding agent 112 could be a material that is activated by a catalyst, such as an aqueous solution, electric fields, electromagnetic radiation / induction heating, among others.

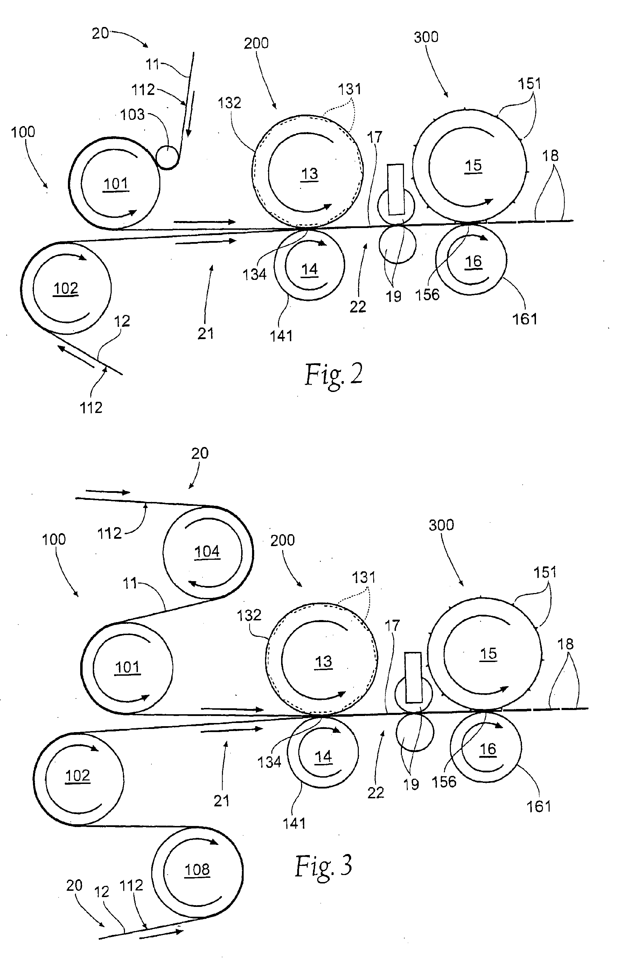

Referring now to FIG. 2, an embodiment of the method according to the present invention is shown. Generally, the method has an activation stage 100 and a pressure application stage 200. This embodiment also includes a cutting stage 300. The bonding agent 112 activation 100 is carried out by heated rollers 101,102. The bonding agent 112, through the webs 11,12 in this embodiment, is sufficiently heated to bring the bonding agent 112 to a temperature that sufficiently activates, but does not destroy, the agent 112. The temperature at which the bonding agent 112 activates is dependent upon the bonding agent 112 and additional heat may be required, depending upon the distance between a point at which the webs 11,12 leave the heated rollers 101,102 and a nip point 134 of crimp rollers 13 and 14.

Specifically, a first web 11 having a bonding agent 112 applied, thereto is fed around a first deflection roller 103 and subsequently around a first heated roller 101. The first deflection roller 103 may or may not be required, depending upon how the first web 11 is presented to the process. Prior to contact with the first heated roller 101, the first web 11 can be said to be in a first position 20. A second web 12 having a bonding agent 112 applied thereto is fed around a second heated roller 102. While it may be desirable to provide a bonding agent 112 on the second web 12 as well, it may not be necessary, depending upon the particular application. If a bonding agent 112 is not provided on the second web 12, the second web roller 12 is preferably not heated. After the webs 11,12 leave their respective rollers 101,102, the webs 11,12 can be said to be in a second position 21. At the second position 21, any bonding agent 112 that was applied to either web 11 or 12 is activated. Furthermore, if desired, product 30 to be sandwiched or packaged between the two webs 11,12 can be placed while the webs are in the second position 21. Examples of such product 30 include without limitation a cut or folded, moistened preparation pad saturated with isopropyl alcohol or even a food product.

Upon reaching the nip 134 of the noncatalytic crimp rollers 13 and 14, the bonding agent 112 applied to the webs 11,12 is still in its active state. The noncatalytic crimp roller 13 preferably has a plurality of indentations 131 in the circumferential surface 132 thereof. If simply mating a first relatively flat web 11 to a second relatively flat web 12, the indentations may not be desirable. However, where product 30 is placed between the first traveling web 11 and the second traveling web 12, the indentations 131 may be required to provide adequate sealing pressure between the noncatalytic crimp roller 13 and the opposing roller 14. After pressure is applied 200, a bonded web 17 has been formed, which comprises the first web 11 bonded to the second web 12, perhaps containing a product 30 sandwiched therebetween.

The resultant seal created by the pressure of the noncatalytic crimp roller 13 may be of any desirable shape. For example, the seal could be a closed shape such as a square, triangle, or circle; the seal could be an open shape like a C shape V shape or W shape; the seal could be linear, longitudinal, transverse or any angle therebetween; or the seal could be continuous, thereby completely laminating a plurality of webs together. The bonded web 17 may contain a plurality of individually sealed products wherein the seal forms the periphery of a product 30 compartment. Alternatively, where a single web may be turned on itself in a C shape, the seal created by the process may itself be C-shaped. That is, the open side of the seal is maintained by a fold in the web. The webs 11,12 provided to the process could be single layer webs having a bonding agent provided thereon, or alternatively could be webs having multiple layers of similar or different materials.

The bonded web 17 may be the final desired product. Alternatively, the bonded web 17 may be subject to further processing, such as cutting. In this embodiment, the bonded web 17 is first longitudinally sliced by a rotary cutter and anvil 19 and then laterally divided by a cutter roll 15 in cooperation with an anvil roll 16.

Referring to FIG. 3, an alternate embodiment of the method according to the present invention is shown. Like the first embodiment, the method has an activation stage 100, a bonding stage 200, and a cutting stage 300. Rather than use only a first heated roller 101 to heat the first web 11, and a second heated roller 102 to heat the second web 12, this embodiment also uses a third heated roller 104 to provide heating to the first web 11 and a fourth heated roller to provide heating to the second web 12. This arrangement may prove useful where the webs 11,12 enter the process at an undesirable angle such that adequate heating could not be provided by only the first heated roller 101. Additionally, use of multiple heated rollers on the same web allows for more gradual heating of the web. Such an arrangement proves beneficial where the web 11 must be heated to an elevated degree so that the bonding agent 112 can remain activated over an extended distance until pressure is applied 200. Furthermore, gradual heating is desirable while the webs are traveling at slower speeds or while a machine incorporating the process is idle. Use of a more rapid heating single roller can leave to scorching the webs. More gradual heating could also be achieved by using a larger heated first roller 101 and second roller 102. An arrangement of that type may require more physical space, however, and such requirement may not be desirable. Also, it may prove difficult to maintain an approximately equal, evenly distributed temperature across the entire surface of a larger roller.

Other alternatives exist for the activating stage 100 of the bonding method. Although the disclosed method utilizes conductive heat transfer, other means exist for heating a heat activated bonding agent. For instance induction heating, radiant heat emitted by heating coils or lamps may prove desirable. Alternatively, although not desired for the handling of more fragile web material, hot air convection could prove useful in some situations.

Referring now to FIGS. 5 and 6, a single bonded compartment 18 made by a method according to the present invention is shown. The bonded compartment 18 was created by the noncatalytic crimp roller 13 and opposing roll 14 of FIG. 4. Generally a desired product 30 was placed between the webs 11,12 prior to the application of pressure by the roller 13. Alternatively, in the case of sandwiching two relatively flat webs to create a multiple layer web, a product 30 is not placed and the bonding agent 112 may be bonded across the entire surface of the webs 11,12.

The foregoing is considered as illustrative only of the principles of the invention. Furthermore, since numerous modifications and changes will readily occur to those skilled in the art, it is not desired to limit the invention to the exact construction and operation shown and described. While the preferred embodiment has been described, the details may be changed without departing from the invention, which is defined by the claims.

## Claims

1. A method for bonding traveling webs, said method comprising the steps of:
providing a plurality of webs, at least one of said webs having a bonding agent applied thereto;
activating said bonding agent, thereby creating an activated web portion;
conveying said plurality of webs, including said activated web portion; and
compressing said plurality of webs, thereby forming a bonded web by an adhesive engagement between at least two of said plurality of webs.

2. A method according to claim 1, said activating step comprising heating said bonding agent.

3. A method according to claim 2, said heating comprising conductive heat transfer.

4. A method according to claim 3, said conductive heat transfer being effected at least partially by a first heated roller contacting said web.

5. A method according to claim 4, said conductive heat transfer being further effected by a second heated roller contacting said web.

6. A method according to claim 2, said heating comprising radiant heat transfer.

7. A method according to claim 6, said radiant heat transfer comprising induction heating.

8. A method according to claim 1, wherein said activating step comprises wetting said bonding agent.

9. A method according to claim 1, wherein said compressing step comprises exerting opposing forces on said plurality of webs by a pressure means.

10. A method according to claim 9, wherein said pressure means comprises at least one crimp roller.

11. A method according to claim 10, wherein said crimp roller comprises at least one indentation protruding radially inward from an outer surface.

12. A method according to claim 9, said pressure means being noncatalytic with respect to said bonding agent.

13. A method according to claim 1, said bonding agent being applied in a uniform pattern to one of said plurality of webs.

14. A method according to claim 1, wherein said adhesive engagement is formed in a closed shape.

15. A method according to claim 14, wherein said closed shape is MARKUSH (generally rectangular, generally elliptical, generally triangular)

16. A method according to claim 15, wherein said adhesive engagement formed in an open shape.

17. A method according to claim 16, wherein said open shape is MARKUSH (generally C-shaped, generally V-shaped, generally W-shaped)

18. A method according to claim 1, further comprising the step of cutting the bonded web.

19. A method according to claim 1, further comprising the step of inserting a consumable product between said at least two bonded layers, contained at least partially by said adhesive engagement.

20. A method according to claim 19, wherein said product is a preparation pad moistened with isopropyl alcohol.

21. A method according to claim 19, wherein said product is a food product.

22. A method for bonding traveling webs, said method comprising the steps of:
providing a web traveling in a longitudinal web direction, said web having a bonding agent applied thereto;
arranging said web into a general C-shape cross-section along said longitudinal direction;
activating said bonding agent, thereby creating an activated web portion;
conveying said activated web portion to a pressure means; and
compressing at least portions of opposing web surfaces created by said general C-shape cross-section, thereby causing an adhesive engagement therebetween.

23. A method according to claim 22, wherein said arranging step occurs prior to said providing step.

24. A method according to claim 22, wherein said arranging step occurs prior to said activating step.
